# EUROPEAN PATENT APPLICATION

(11) **EP 2 782 012 A1**
(43) Date of publication of application: **24.09.2014**
(21) Application number: 14151731.8
(22) Date of filing: 20.01.2014
(51) Int. Cl.: G06F 11/07

(54) **System and method for notifying abnormality information to each of a plurality of processing units prior to the collection of log information**

(30) Priority: 21.03.2013 JP 2013058014
(71) Applicant: FUJITSU LIMITED, Kawasaki-shi, Kanagawa 211-8588 (JP)
(72) Inventor: Nakai, Jinsuke, Kanagawa, 211-8588 (JP); Matsumoto, Naoki, Kanagawa, 211-8588 (JP)
(74) Representative: HOFFMANN EITLE

(57) **Abstract**

An information processing system (1) including a plurality of information processing apparatuses (20), wherein each of the information processing apparatuses (20) includes an abnormality detection unit (23) that detects the occurrence of abnormality, a log information collection unit (221) that collects log information of the information processing apparatus (20) from which the abnormality is detected, an abnormal apparatus information creation unit (223) that creates abnormal apparatus information indicating the information processing apparatus (20) from which the abnormality is detected, prior to the collection of the log information by the log information collection unit (221), and an abnormal apparatus information notifying unit (210a) that notifies the abnormal apparatus information created by the abnormal apparatus information creation unit (223) to each of the plurality of information processing apparatuses (20), prior to the collection of the log information by the log information collection unit (221).

## Description

### FIELD

The embodiments discussed herein are related to an information processing system, an information processing apparatus, and a failure processing method.

### BACKGROUND

A server system which is operated in a backbone system needs to have high availability and to flexibly use resources (hardware resources). A so-called multi-node (multi-domain or multipartition) function has been used as a method for achieving the high availability and the flexible use of the resources.

In a multi-node system, the hardware resources of the system are divided and allocated to a plurality of nodes (domains or partitions) and an operating system (OS) operates on each node. In addition, in the multi-node system, the nodes are closely associated with each other and a plurality of nodes can form one system.

In the multi-node system including a plurality of nodes, one of the plurality of nodes is used as a master node and collects information from the other slave nodes to monitor or control the overall system. Firmware which operates on the boards of the master node and the slave nodes monitors or controls the overall system.

In the multi-node system, when a failure, such as a power failure or a path failure, is detected from a given node, only the node is down (partial degeneracy) and the other nodes are continuously operated.

In a multi-node system according to the related art, when a failure is detected from a given node, first, the node collects a log. For example, firmware collects information about a failure in a hardware chip and transmits the collected log to a master node.

The master node analyzes the collected log and notifies each slave node of abnormal node information indicating the node which is down due to abnormality. It is preferably to check which node is down in the system in which the nodes are associated with each other.

Each slave node which receives the abnormal node information notifies the abnormal node information to a host application, such as a hypervisor, an OS, or various applications which operate on the slave node, based on the notified abnormal node information.

The host application performs a system reconstruction process, such as a process of disconnecting an abnormal node, based on the received abnormal node information.

### CITATION LIST

### PATENT LITERATURE

[Patent Literature 1] International Publication Pamphlet No. WO 2008/099453
[Patent Literature 2] Japanese Laid-Open Patent Publication No. 10-333932

### SUMMARY OF THE INVENTION

### PROBLEMS TO BE SOLVED BY THE INVENTION

However, a time of a few tens of seconds to a few minutes is required to collect or analyze the log. Therefore, in the multi-node system according to the related art, when a failure occurs in a given node, it takes a long time until the host application reconstructs the system after abnormal node information is notified to each slave node. It is preferable that each node notify the host application of the occurrence of a failure in the shortest possible time after the failure is detected.

According to an aspect, an object of the invention is to reduce the time taken when an abnormality occurs in an information processing apparatus and then after another information processing apparatus handles it.

Further, the invention is not limited to the above object, and also operational advantages that are resulted from the respective configurations illustrated in the following embodiments for carrying out the invention, having difficulties to be obtained through the related art, can be included as one of other objects.

### MEANS TO SOLVE THE PROBLEMS

Therefore, according to an aspect of the embodiments, an information processing system includes a plurality of information processing apparatuses. Each of the information processing apparatuses includes an abnormality detection unit that detects the occurrence of abnormality, a log information collection unit that collects log information of the information processing apparatus from which the abnormality is detected, an abnormal apparatus information creation unit that creates abnormal apparatus information indicating the information processing apparatus from which the abnormality is detected, prior to the collection of the log information by the log information collection unit, and an abnormal apparatus information notifying unit that notifies the abnormal apparatus information created by the abnormal apparatus information creation unit to each of the plurality of information processing apparatuses, prior to the collection of the log information by the log information collection unit.

### EFFECT OF THE INVENTION

According to the disclosed information processing system, it is possible to reduce the time from the occurrence of failure in an information processing apparatus to the coping of another information processing apparatus with the failure.

### BRIEF DESCRIPTION OF DRAWINGS

FIG. 1 is a diagram schematically illustrating the functional structure of a multi-node system according to an embodiment;
FIG. 2 is a diagram schematically illustrating the hardware structure of the multi-node system according to the embodiment;
FIG. 3 is a diagram schematically illustrating the functional structure of slave firmware of the multi-node system according to the embodiment;
FIG. 4 is a diagram schematically illustrating the functional structure of an FPGA of the multi-node system according to the embodiment;
FIG. 5 is a diagram illustrating the structure of a CNTL register in the multi-node system according to the embodiment;
FIG. 6 is a diagram illustrating the structure of a STATUS register in the multi-node system according to the embodiment;
FIG. 7 is a diagram illustrating the structure of an INT register in the multi-node system according to the embodiment;
FIG. 8 is a diagram illustrating the structure of a MASK register in the multi-node system according to the embodiment;
FIG. 9 is a sequence diagram illustrating a failure process of the multi-node system according to the embodiment;
FIG. 10 is a diagram illustrating the failure process of the multi-node system according to the embodiment;
FIG. 11 is a diagram illustrating the failure process when the multi-node system according to the embodiment is provided;
FIG. 12 is a diagram illustrating the failure process when the multi-node system according to the embodiment is provided;
FIG. 13 is a diagram illustrating the failure process when the multi-node system according to the embodiment is provided;
FIG. 14 is a flowchart illustrating the failure process of the slave firmware of the multi-node system according to the embodiment;
FIG. 15 is a flowchart illustrating the failure process of the slave firmware of the multi-node system according to the embodiment;
FIG. 16 is a flowchart illustrating the failure process of the slave firmware of the multi-node system according to the embodiment;
FIG. 17 is a flowchart illustrating the failure process of the slave firmware of the multi-node system according to the embodiment;
FIGS. 18A and 18B are sequence diagrams illustrating the comparison between a failure process of a multi-node system according to the related art and the failure process of the multi-node system according to the embodiment;
FIG. 19A is a diagram illustrating the time required for the failure process of the multi-node system according to the related art; and
FIG. 19B is a diagram illustrating the time required for the failure process of the multi-node system according to the embodiment.

### DESCRIPTION OF EMBODIMENTS

### [A] Embodiment

Hereinafter, an information processing system, an information processing apparatus, and a failure processing method according to an embodiment will be described with reference to the drawingever, the following embodiment is an illustrative example and the embodiment also includes various modifications or techniques which are not described in the following embodiment. That is, various modifications (for example, combinations of the embodiment and each modification) of the embodiment can be made without departing from the scope and spirit of the embodiment.

The drawings do not include only the illustrated components, but may include other functions.

### [A-1] Structure of System

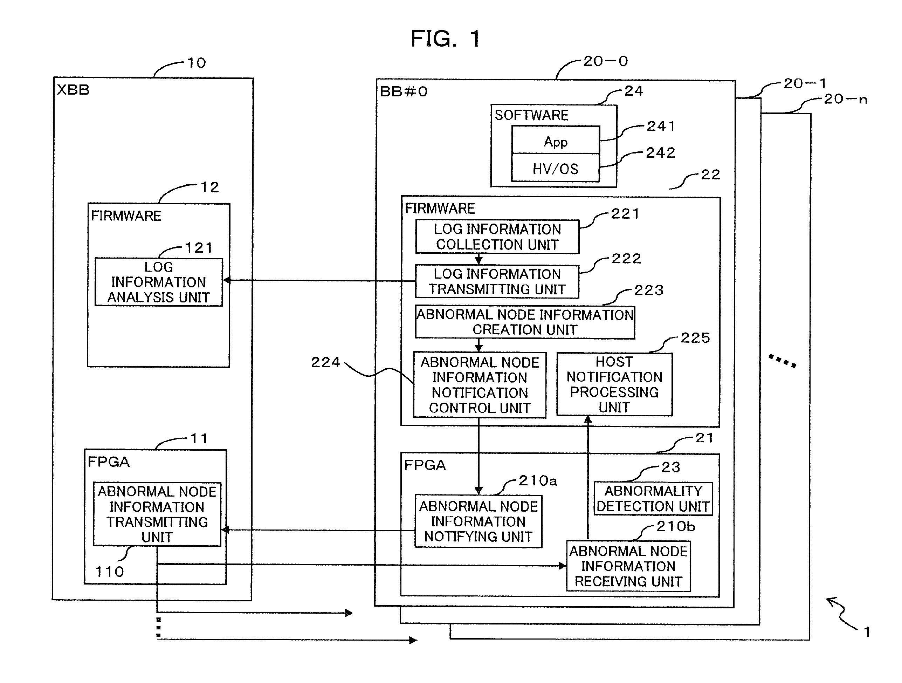

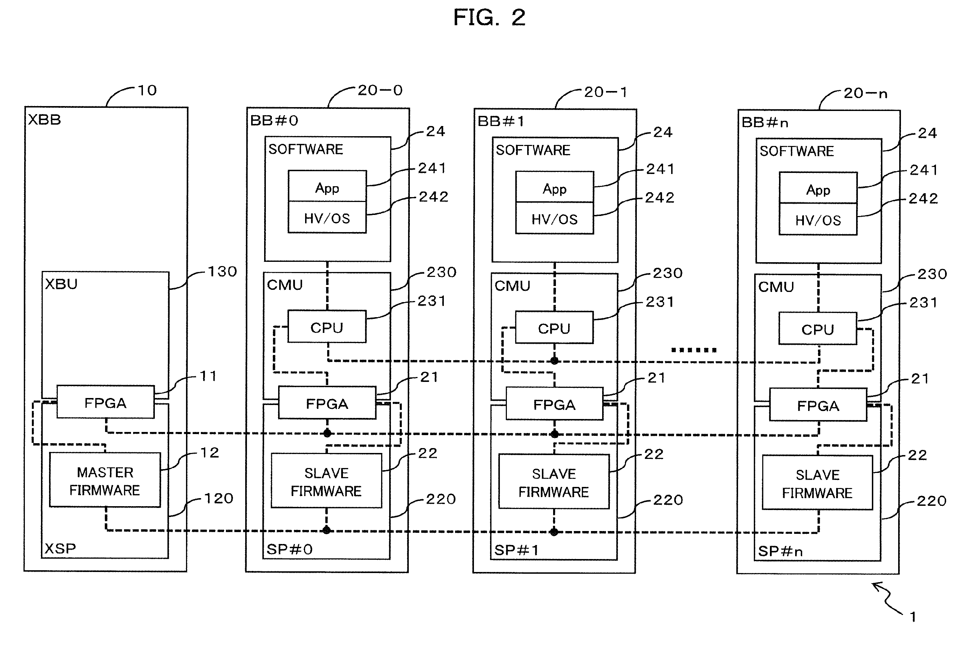

FIG. 1 is a diagram schematically illustrating the functional structure of a multi-node system according to the embodiment and FIG. 2 is a diagram schematically illustrating the hardware structure of the multi-node system according to the embodiment.

As illustrated in FIG. 2, a multi-node system (information processing system) 1 according to the embodiment includes a cross-bar box (XBB; a communication control device or a communication control unit) 10 and one or more building blocks (BB; information processing apparatuses) 20-0 to 20-n (n is an integer equal to or greater than 0).

The BB is a hardware structure unit and forms a node (computer node).

Hereinafter, when one of a plurality of BBs needs to be specified, reference numerals 20-0 to 20-n are used as reference numerals indicating the BBs. When an arbitrary BB is designated, reference numeral 20 is used.

In the multi-node system 1, the nodes are closely associated with each other and a plurality of BBs 20 form one system. In the multi-node system 1, the XBB 10 functions as a master node and the BB 20 functions as a slave node. Specifically, each BB 20 executes various kinds of software to perform various processes and the XBB 10 associates the BBs 20 to form one system.

The BBs 20 have the same functional structure. As illustrated in FIG. 2, for example, numbers #0 to #n are given to the BBs 20.

Hereinafter, in some cases, the BB 20-0 is referred to as BB #0, the BB 20-1 is referred to as BB #1, and the BB 20-n is referred to as BB #n.

The BB 20 includes a field programmable gate array (FPGA; a communication unit) 21, a service processor (SP) 220, a CPU memory unit (CMU) 230, and software (host application) 24.

The software 24 includes an application (App) 241 and a hypervisor/operating system (HV/OS) 242.

The HV is a control program for implementing a virtual machine which is one of the virtualization techniques of a computer and controls an OS (virtual OS) over a plurality of BBs 20. The application 241 is executed on the HV/OS 242.

The CMU 230 includes a central processing unit (CPU) 231.

The CPU 231 is a processing device which performs various control or calculation operations and executes an OS or a program (software 24) stored in a memory (not illustrated) to implement various functions.

The software (a host application or a program) 24 is recorded on a computer-readable recording medium, such as a flexible disk, a CD (for example, CD-ROM, CD-R, or CD-RW), a DVD (for example, DVD-ROM, DVD-RAM, DVD-R, DVD+R, DVD-RW, DVD+RW, or HD DVD), a Blu-ray disk, a magnetic disk, an optical disk, or a magneto-optical disk, and is then provided. The computer reads the program from the recording medium through a drive device (not illustrated), transmits the program to an internal recording device or an external recording device, stores the program in the recording device, and uses the program. In addition, the program may be stored in a storage device (recording medium), such as a magnetic disk, an optical disk, or a magneto-optical disk, and then provided from the storage device to the computer through a communication path.

The software (host application) 24 is executed by a microprocessor (in the embodiment, the CPU 231) of the computer. In this case, the computer may read the software 24 recorded on the recording medium and then execute the software 24.

In the embodiment, the computer includes hardware and an OS and means hardware which operates under the control of the OS. When the OS is not needed and the hardware is operated only by an application program, the hardware corresponds to the computer. The hardware includes at least a microprocessor, such as a CPU, and a means to read a computer program recorded on the recording medium. In the embodiment, the XBB 10 and the BB 20 function as the computer.

The SP 220 is a processing device which manages the BB 20, monitors the occurrence of abnormality in, for example, the BB 20 and performs a process of notifying the occurrence of abnormality or a recovery process when abnormality occurs. As illustrated in FIG. 2, for example, numbers corresponding to numbers #0 to #n given to the BBs 20 are given to the SPs 220. For example, BB #0 includes the SP 220 with #0.

The SP 220 includes slave firmware (FW) 22. The SP 220 includes a processor or a memory (not illustrated). The processor executes a program (firmware 22) to implement various functions.

The slave firmware 22 is recorded on a computer-readable recording medium, such as a flexible disk, a CD (for example, CD-ROM, CD-R, or CD-RW), a DVD (for example, DVD-ROM, DVD-RAM, DVD-R, DVD+R, DVD-RW, DVD+RW, or HD DVD), a Blu-ray disk, a magnetic disk, an optical disk, or a magneto-optical disk and is then provided. The computer reads the program from the recording medium through a drive device (not illustrated), transmits the program to an internal recording device or an external recording device, stores the program in the recording device, and uses the program. In addition, the program may be stored in a storage device (recording medium), such as a magnetic disk, an optical disk, or a magneto-optical disk, and then provided from the storage device to the computer through a communication path.

When the function of the slave firmware 22 is implemented, a program stored in an internal storage device (not illustrated) is executed by a microprocessor (in the embodiment, a processor (not illustrated)) of the computer. In this case, the computer may read the program recorded on the recording medium and execute the read program.

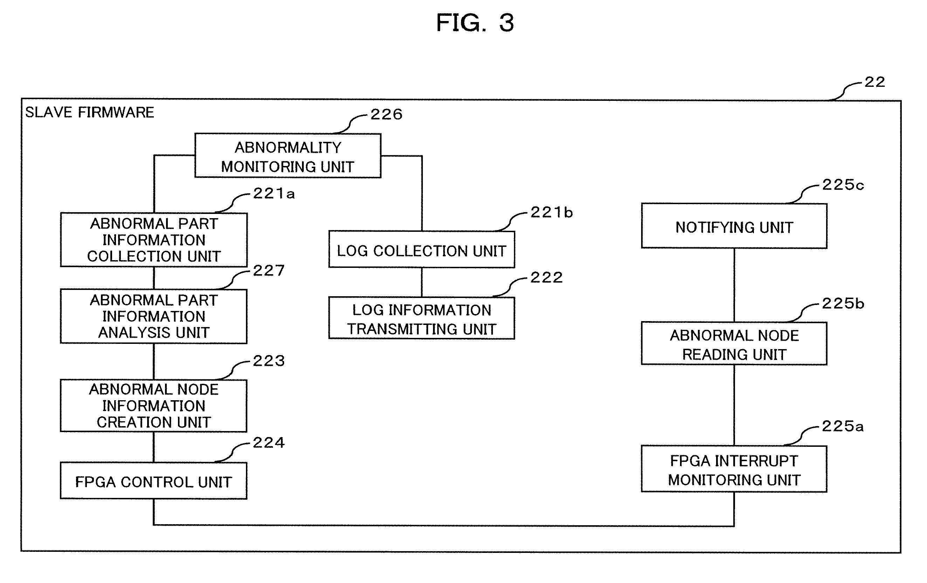

FIG. 3 is a diagram schematically illustrating the functional structure of the slave firmware of the multi-node system according to the embodiment.

As illustrated in FIG. 3, the slave firmware 22 includes an abnormal part information collection unit 221a, a log collection unit 221b, a log information transmitting unit 222, an abnormal node information creation unit (abnormal apparatus information creation unit) 223, an FPGA control unit 224, an FPGA interrupt monitoring unit 225a, an abnormal node reading unit 225b, a notifying unit 225c, an abnormality monitoring unit 226, and an abnormal part information analysis unit 227.

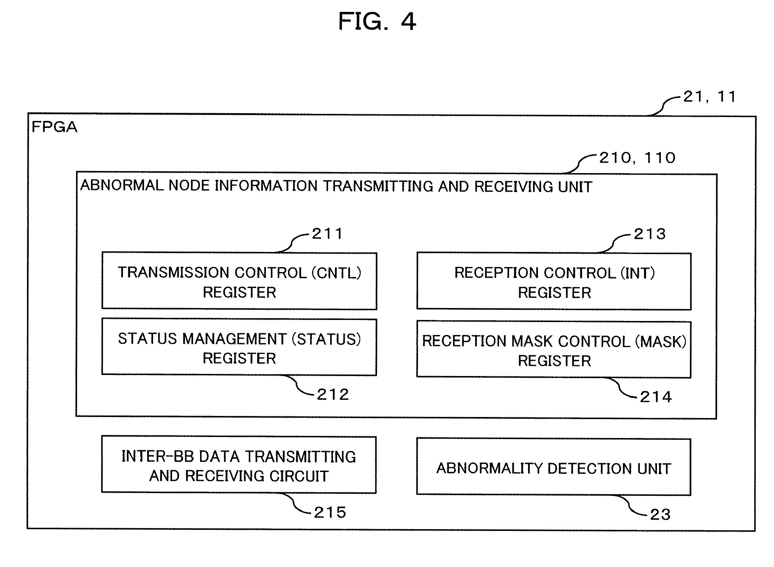

The abnormality monitoring unit 226 detects the interrupt of the occurrence of abnormality by the abnormality detection unit 23, which will be described below with reference to FIG. 4. When the BB 20 in which abnormality occurs is down, the abnormality monitoring unit 226 detects the occurrence of the abnormality, instead of the abnormality detection unit 23. In addition, the abnormality monitoring unit 226 may detect abnormality which occurs in another BB 20.

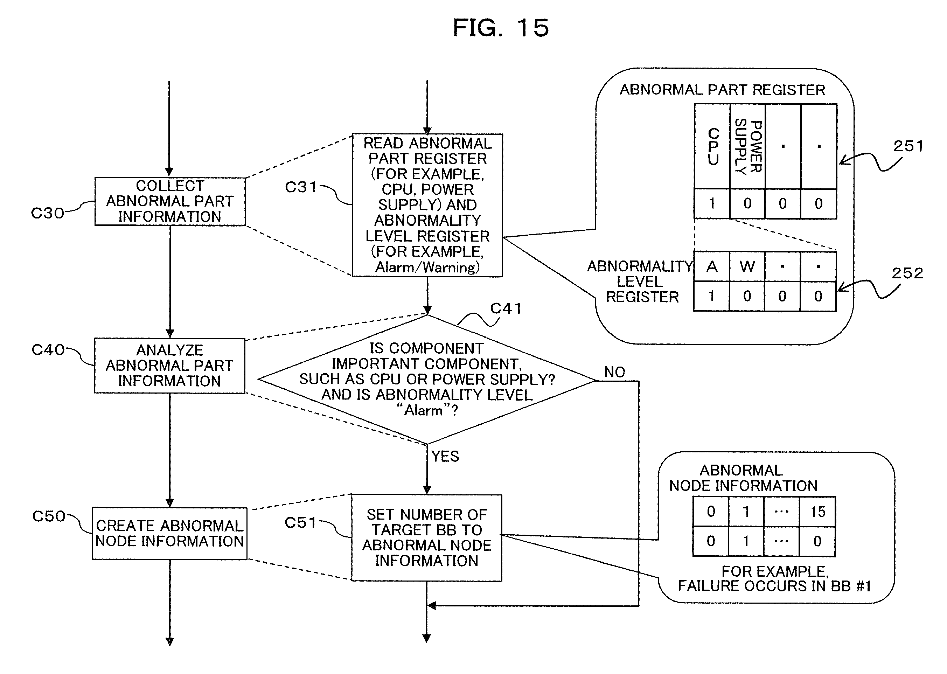

The abnormal part information collection unit 221a collects the abnormal part information of the BB 20 in which abnormality occurs when the abnormality monitoring unit 226 detects the interrupt. Specifically, the abnormal part information collection unit 221a reads the register values of an abnormal part register 251 and an abnormality level register 252, which will be described below with reference to FIG. 15, and collects the abnormal part information.

The abnormal part information analysis unit 227 analyzes the abnormal part information collected by the abnormal part information collection unit 221a. Specifically, the abnormal part information analysis unit 227 analyzes whether a component in the BB 20 in which abnormality occurs is an important component or whether the abnormality level is equal to or more than a predetermined value, based on the register values of the abnormal part register 251 and the abnormality level register 252, which will be described below with reference to FIG. 15.

The abnormal node information creation unit 223 creates abnormal node information (abnormal apparatus information) based on the abnormal part information analyzed by the abnormal part information analysis unit 227.

The abnormal node information is information in which the BBs 20 provided in the multi-node system 1 are associated with the abnormal state thereof, which will be described below with reference to FIG. 15, and indicates the BB 20 in which abnormality occurs.

That is, the abnormal part information collection unit 221a and the abnormal part information analysis unit 227 collect and analyze only the abnormal part information, which is log information required for the abnormal node information creation unit 223 to create the abnormal node information.

The FPGA control unit 224 writes the abnormal node information created by the abnormal node information creation unit 223 to the FPGA 21. Specifically, the FPGA control unit 224 writes the abnormal node information as the register value to a transmission control register 211 (see FIG. 4 which will be described below) of the FPGA 21.

The log collection unit 221b collects log information about abnormality from the BB 20 in which abnormality occurs. The log collection unit 221b collects the detailed information (for example, information about a thread number and a core number at which failure occurs in the CPU 231 and the type of failure which occurs) of the abnormal information of hardware.

The log information transmitting unit 222 transmits the log information collected by the log information collection unit 221b to the XBB 10.

The FPGA interrupt monitoring unit 225a detects the interrupt of the abnormal node information from the FPGA 21 and notifies the abnormal node information to the abnormal node reading unit 225b.

The abnormal node reading unit 225b reads the abnormal node information when the FPGA interrupt monitoring unit 225a detects the interrupt. Specifically, the abnormal node reading unit 225b reads the register value of a reception control register 213 (see FIG. 4 which will be described below) of the FPGA 21.

The notifying unit 225c notifies the abnormal node information read by the abnormal node information reading unit 225b to the host application 24, such as the application 241 or the HV/OS 242.

FIG. 4 is a diagram schematically illustrating the functional structure of the FPGA of the multi-node system according to the embodiment.

The FPGA 21 is an integrated circuit which can arbitrarily set configuration and is a processor which performs a real-time process. As illustrated in FIG. 2, the FPGA 21 is provided between the CMU 230 and the SP 220. For example, the FPGA 21 includes a plurality of FPGAs. Some of the FPGAs are provided in the CMU 230 and some of the FPGAs are provided in the SP 220. As illustrated in FIG. 4, the FPGA 21 includes an abnormality detection unit 23, an abnormal node information transmission and reception function unit 210, and an inter-BB data transmitting and receiving circuit 215.

The abnormality detection unit 23 is provided as one of the functions of the FPGA 21. The FPGA 21 and hardware to be monitored (for example, large scale integration (LSI), such as the CPU 231 or a memory, a power supply unit, and a temperature sensor) are connected to each other by a cable. The abnormality detection unit 23 opens the register values of the abnormal part register 251 and the abnormality level register 252 to firmware and the firmware monitors an interrupt from these registers. When abnormality occurs in the hardware to be monitored, the abnormality detection unit 23 detects the abnormality which occurs in the host node or another node, updates the register values of the abnormal part register 251 and the abnormality level register 252 as described with reference to FIG. 15, and issues an interrupt to the slave firmware 22. The abnormality detection unit 23 detects abnormality using various known methods such as a self-diagnosis function. Examples of the abnormality include errors in the CPU 231 or a memory (not illustrated), a power failure, and a path failure.

The inter-BB data transmitting and receiving circuit 215 is a circuit which is connected so as to communicate with the FPGAs 21 of other BBs 20 and the FPGA 11, which will be described below, of the XBB 10. The inter-BB data transmitting and receiving circuit 215 transmits and receives data between the FPGA 11 and the FPGA 21.

The abnormal node information transmission and reception function unit 210 relays the abnormal node information between the host node and the master node. Specifically, the abnormal node information transmission and reception function unit 210 transmits the abnormal node information which is written to the transmission control register 211 by the FPGA control unit 224 to the FPGA 11 of the XBB 10, which will be described below, and interrupts the abnormal node information received from the FPGA 11 to the FPGA interrupt monitoring unit 225a.

As illustrated in FIG. 4, the abnormal node information transmission and reception function unit 210 includes a transmission control (CNTL) register 211, a status management (STATUS) register 212, a reception control (INT) register 213, and a reception mask control (MASK) register 214.

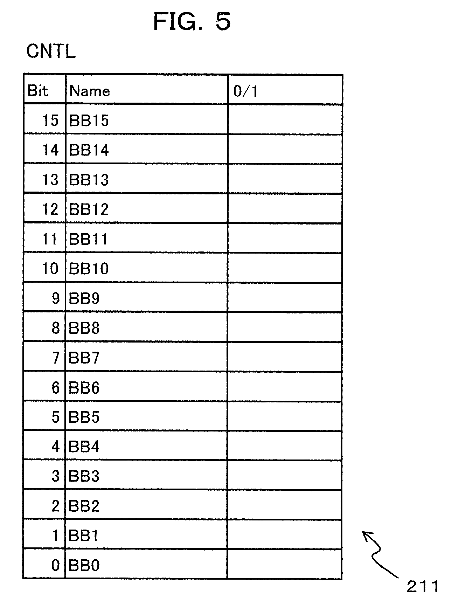

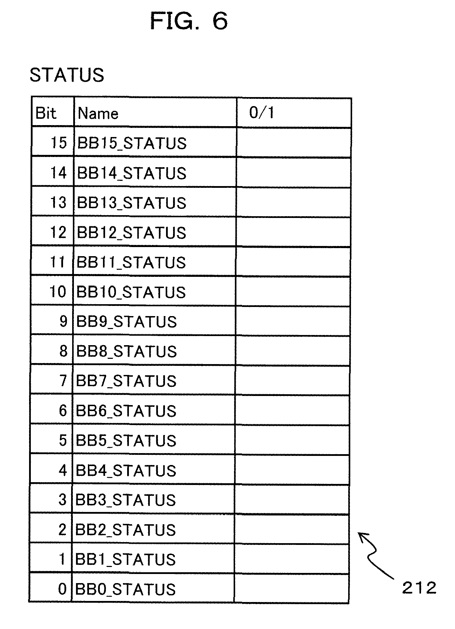

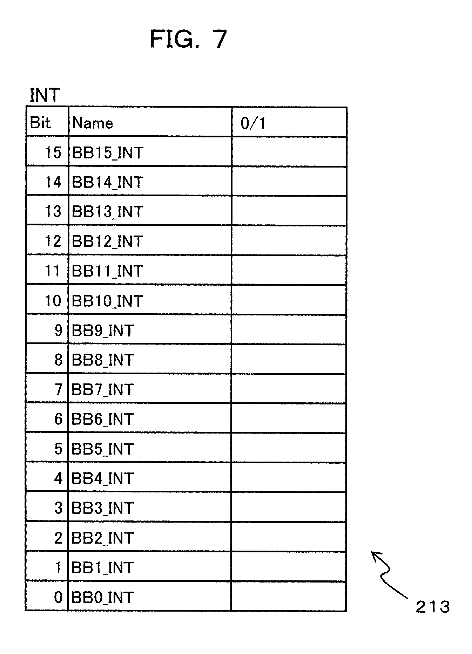

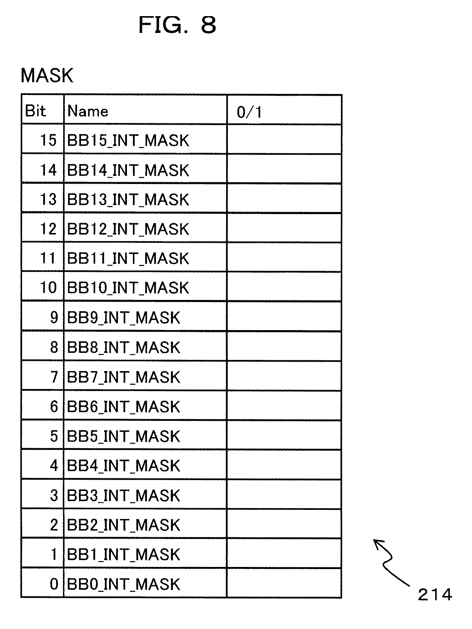

FIG. 5 is a diagram illustrating the structure of the CNTL register of the multi-node system according to the embodiment. FIG. 6 is a diagram illustrating the structure of the STATUS register. FIG. 7 is a diagram illustrating the structure of the INT register. FIG. 8 is a diagram illustrating the structure of the MASK register.

Next, an example in which n is 15, that is, the multi-node system 1 includes 16 BBs #0 to #15 will be described with reference to FIGS. 5 to 8.

The CNTL register 211 is a register to which data is written by the FPGA control unit 224 when abnormality is detected from the BB 20. The CNTL register 211 can store a bit number (in the example, 16 bits) corresponding to the number of BBs 20 illustrated in FIG. 5 and bits 0 to 15 correspond to BBs #0 to #15, respectively.

In FIG. 5, an item Name indicates the name of each BB 20 included in the multi-node system 1. That is, in the example, the multi-node system 1 includes BBs #0 to #15 which are respectively represented by BB0 to BB15.

In the CNTL register 211, "0" or "1" is set to each BB 20 (Bit), as illustrated in an item "0/1" of FIG. 5. In the CNTL register 211, for example, "0" is set as the initial value of the register value to all bits. The FPGA control unit 224 writes a value "1" indicating the occurrence of failure to the node in which abnormality occurs. For example, when abnormality occurs in BB #3, the FPGA control unit 224 of BB #3 writes "1" to bit 3. In addition, when it is difficult to notify the abnormal node to another node due to, for example, the power supply failure of the BB 20, the FPGA control unit 224 of another node writes "1" to the bit corresponding to the node in which the failure occurs. For example, when the FPGA control unit 224 of BB #2 detects a power supply failure in BB #3, "1" is written to bit 3.

The value written to the CNTL register 211 is written to the STATUS register 212 by the FPGA 21. The STATUS register 212 can store a bit number (in the example, 16 bits) corresponding to the number of BBs 20 illustrated in FIG. 6 and bits 0 to 15 correspond to BBs #0 to #15, respectively.

In FIG. 6, an item Name indicating the name of each BB 20 provided in the multi-node system 1. That is, in the example, BBs #0 to #15 provided in the multi-node system 1 are represented by BBO_STATUS to BB15_STATUS, respectively.

In the STATUS register 212, as illustrated in an item "0/1" of FIG. 6, "0" or "1" is set to each BB 20 (Bit). In the STATUS register 212, for example, "0" is set as the initial value of the register value to all bits. For example, when the FPGA control unit 224 writes "1" to bit 3 of the CNTL register 211, the FPGA 21 sets "1" to bit 3 of the STATUS register 212.

The abnormal node information which is transmitted to and received from other nodes including the master node includes the register value of the STATUS register 212. That is, the register value of the STATUS register 212 is used as the abnormal node information. A reception-side node updates the bit corresponding to the register value of its own STATUS register 212. Specifically, for the bit to which "1" is set in the transmission-side STATUS register 212, the register value of the STATUS register 212 of the node is updated and "1" is written.

The INT register 213 indicates the bit (BB 20) which has been updated in the STATUS register 212. The INT register 213 can store a bit number (in the example, 16 bits) corresponding to the number of BBs 20 illustrated in FIG. 7 and bits 0 to 15 correspond to BBs #0 to #15, respectively.

In FIG. 7, an item Name indicates the name of each BB 20 provided in the multi-node system 1. That is, in the example, BBs #0 to #15 provided in the multi-node system 1 are represented by BB0_INT to BB15_INT, respectively.

In the INT register 213, as illustrated in an item "0/1" of FIG. 7, "0" or "1" is set to each BB 20 (Bit). In the INT register 213, for example, "0" is set as the initial value of the register value to all bits. As described above, when the XBB 10 or the BB 20 receives the abnormal node information and updates the STATUS register 212 of the host node, the bits of the INT register 213 corresponding to the bits which have been updated in the STATUS register 212 are updated.

When "1" is set to any bit of the INT register 213, the abnormal node information transmission and reception function unit 210 interrupts the abnormal node information to the FPGA interrupt monitoring unit 225a.

The MASK register 214 is used to invalidate the detection of abnormality. When there is a node which does not detect abnormality, for example, the operator sets "0" to the node in the MASK register 214. The MASK register 214 can store a bit number (in the example, 16 bits) corresponding to the number of BB 20 illustrated in FIG. 8 and bits 0 to 15 correspond to BB #0 to #15, respectively.

In FIG. 8, an item Name indicates the name of each BB 20 provided in the multi-node system 1. That is, in the example, BBs #0 to #15 provided in the multi-node system 1 are represented by BBO_INT_MASK to BB15_INT_MASK, respectively.

In the MASK register 214, as illustrated in an item "0/1" of FIG. 8, "0" or "1" is set to each BB 20 (bit). In the MASK register 214, for example, "0" is set as the initial value of the register value to all bits. When the bit of the MASK register 214 corresponding to the bit to which the updated register value "1" is set in the INT register 213 is "0", the abnormal node information transmission and reception function unit 210 interrupts the abnormal node information to the FPGA interrupt monitoring unit 225a, as described above. On the other hand, when the bit of the MASK register 214 corresponding to the bit to which the updated register value "1" is set in the INT register 213 is "1", the abnormal node information transmission and reception function unit 210 masks the interrupt of the abnormal node information, without interrupting the abnormal node information to the FPGA interrupt monitoring unit 225a.

Even when the value of the corresponding bit of the MASK register 214 is "1", "1" is set to the INT register 213. For example, the operator can arbitrarily update the value of each bit in the MASK register 214.

As illustrated in FIG. 2, the XBB 10 includes the FPGA 11, a cross-bar service processor (XSP) 120, and a cross-bar unit (XBU) 130.

The XBU 130 is dedicated hardware which connects the CMUs 230 of the BBs 20 such that they can communicate with each other.

The XSP 120 is a processing device which manages the XBB 10 and each BB 20 and performs, for example, a process of monitoring abnormality in each BB 20 and a process of notifying the occurrence of abnormality or a recovery process when abnormality occurs. The XSP 120 includes master firmware (FW) 12. The XSP 120 includes a processor or a memory (not illustrated). The processor executes a program to implement the functions of the master firmware 12.

A program for implementing the functions of the master firmware 12 is recorded on a computer-readable recording medium, such as a flexible disk, a CD (for example, CD-ROM, CD-R, or CD-RW), a DVD (for example, DVD-ROM, DVD-RAM, DVD-R, DVD+R, DVD-RW, DVD+RW, or HD DVD), a Blu-ray disk, a magnetic disk, an optical disk, or a magneto-optical disk, and is then provided. The computer reads the program from the recording medium through a drive device (not illustrated), transmits the program to an internal recording device or an external recording device, stores the program in the recording device, and uses the program. In addition, the program may be stored in a storage device (recording medium), such as a magnetic disk, an optical disk, or a magneto-optical disk, and then provided from the storage device to the computer through a communication path.

When the functions of the master firmware 12 are implemented, the program stored in the internal storage device (not illustrated) is executed by a microprocessor (in the embodiment, a processor (not illustrated)) of the computer. In this case, the computer may read the program recorded on the recording medium and execute the read program.

The master firmware 12 includes a log information analysis unit 121, which will be described below, as illustrated in FIG. 1.

The log information analysis unit 121 receives the log information transmitted from the log information transmitting unit 222 of the BB 20 and analyzes the log information.

The FPGA 11 has the same functional structure as the FPGA 21 of the BB 20 except for the abnormality detection unit 23. That is, the FPGA 11 includes an abnormal node information transmission and reception function unit 110 and an inter-BB data transmitting and receiving circuit 215 except for the abnormality detection unit 23 illustrated in FIG. 4.

In the XBB 10, the abnormal node information transmission and reception function unit 110 transmits (broadcasts) the abnormal node information received from the BB 20 to each BB 20. The abnormal node information transmission and reception function unit 110 has the same structure as the abnormal node information transmission and reception function unit 210, as illustrated in FIG. 4.

In the multi-node system 1, as represented by a dashed line in FIG. 2, the FPGAs 21 which are provided in the XBB 10 and each BB 20 are connected by, for example, a dedicated bus between the BBs so as to communicate with each other. The master firmware 12 provided in the XBB 10 and the slave firmware 22 provided in each BB 20 are connected by, for example, a bus line so as to communicate with each other. The FPGA 11 and the master firmware 12 of the XBB 10 are connected by, for example, a bus line so as to communicate with each other. The FPGA 21 and the slave firmware 22 of the BB 20 are connected by, for example, a bus line so as to communicate with each other. The FPGA 21 and the CPU 231 of the BB 20 are connected by, for example, a bus line so as to communicate with each other.

The functional structure of the multi-node system 1 which has been described above with reference to FIGS. 2 to 4 can be schematically illustrated, as illustrated in FIG. 1.

Hereinafter, in the drawings, the same reference numerals as described above denote the same components as described above and the description thereof will not be repeated.

In FIG. 1, the abnormal node information transmitting unit (abnormal apparatus information transmitting unit) 110 in the FPGA 11 of the XBB 10 corresponds to the abnormal node information transmission and reception function unit 110 illustrated in FIG. 4. An abnormal node information notifying unit (abnormal apparatus information notifying unit) 210a and an abnormal node information receiving unit 210b in the FPGA 21 of the BB 20 correspond to the abnormal node information transmission and reception function unit 210 illustrated in FIG. 4. A log information collection unit 221 in the firmware 22 of the BB 20 corresponds to the abnormal part information collection unit 221a and the log collection unit 221b illustrated in FIG. 3 and an abnormal node information notification control unit 224 corresponds to the FPGA control unit 224. A host notification processing unit 225 corresponds to the FPGA interrupt monitoring unit 225a, the abnormal node reading unit 225b, and the notifying unit 225c illustrated in FIG. 3.

### [A-2] Operation

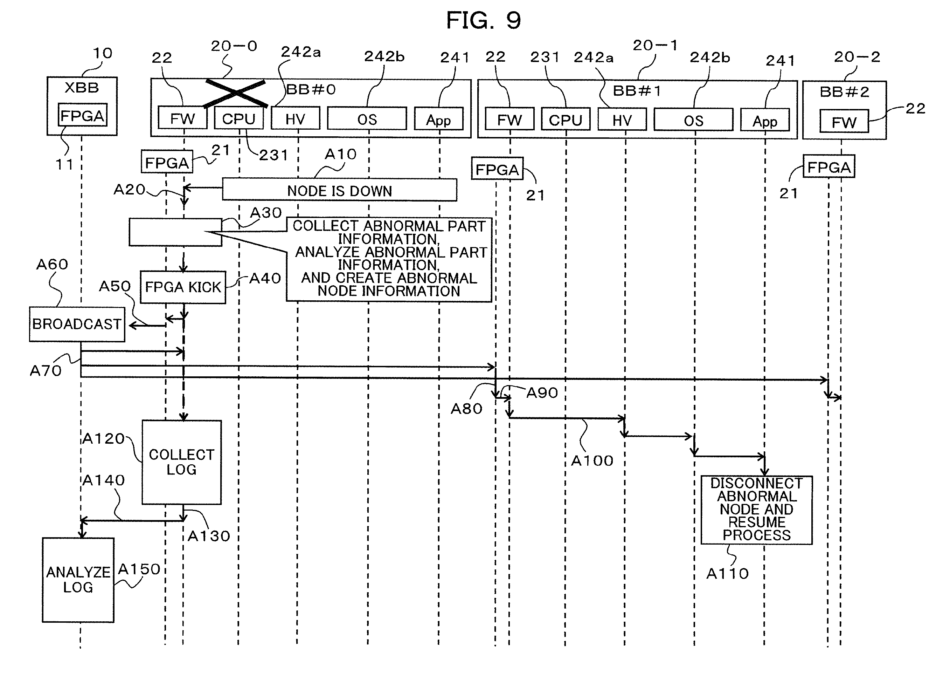

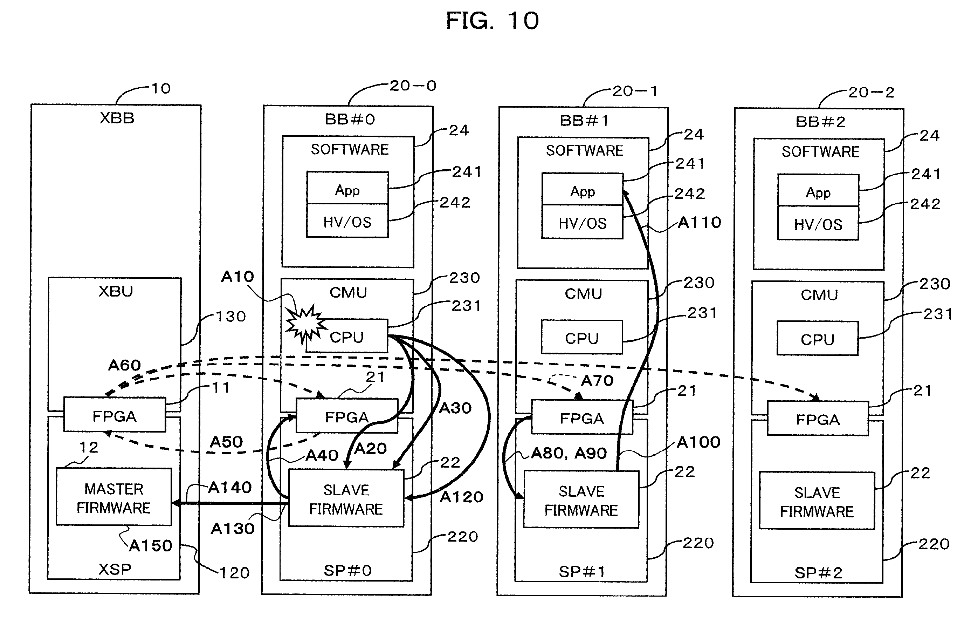

A failure process of the multi-node system 1 having the above-mentioned structure according to the embodiment will be described according to the sequence diagram (reference numerals A10 to A150) illustrated in FIG. 9, while referring to FIG. 10.

Next, an example in which n is 2, that is, the multi-node system 1 includes three BBs #0 to #2 will be described with reference to FIGS. 9 and 10.

In FIG. 9, an HV 242a and an OS 242b correspond to the HV/OS 242 illustrated in FIG. 2 and some functional structures of BB #2 are not illustrated for simplicity of illustration.

When abnormality occurs in BB #0 and BB #0 is down (node is down), the abnormality detection unit 23 of BB #0 detects the abnormality which occurs in the host node and issues an interrupt to the slave firmware 22 (see reference numeral A10).

The abnormality monitoring unit 226 detects the interrupt of the occurrence of abnormality by the abnormality detection unit 23 (see reference numeral A20).

When the abnormality monitoring unit 226 detects the interrupt, the abnormal part information collection unit 221a collects the abnormal part information of the BB 20 in which abnormality occurs. The abnormal part information analysis unit 227 analyzes the abnormal part information collected by the abnormal part information collection unit 221a. The abnormal node information creation unit 223 creates abnormal node information, based on the abnormal part information analyzed by the abnormal part information analysis unit 227 (see reference numeral A30).

The FPGA control unit 224 writes the abnormal node information created by the abnormal node information creation unit 223 to the FPGA 21 (kicks the FPGA) (see reference numeral A40).

The abnormal node information notifying unit 210a transmits the abnormal node information written by the FPGA control unit 224 to the XBB 10 (see reference numeral A50).

The abnormal node information transmitting unit 110 of the XBB 10 simultaneously transmits (broadcasts) the abnormal node information received from the BB 20 to each BB 20 (see reference numeral A60).

The abnormal node information receiving units 210b of all of the BBs 20 receive the abnormal node information from the XBB 10 (see reference numeral A70).

BBs #1 and #2 perform the same procesever, in the embodiment, for convenience of explanation, the process performed by BB #1 will be described as illustrated in FIGS. 9 and 10.

The abnormal node information receiving unit 210b interrupts the received abnormal node information to the FPGA interrupt monitoring unit 225a (see reference numeral A80).

The FPGA interrupt monitoring unit 225a detects the interrupt of the abnormal node information from the FPGA 21 (see reference numeral A90).

The abnormal node reading unit 225b reads the abnormal node information and the notifying unit 225c notifies the abnormal node information read by the abnormal node reading unit 225b to the host application 24, such as the application 241, the HV 242a, or the OS 242b (see reference numeral A100).

Then, the application 241, the HV 242a, and the OS 242b perform, for example, a process of disconnecting the abnormal node, based on the received abnormal node information to reconstruct the system and resumes the process (see reference numeral A110). Since the process of the application 241, the HV 242a, and the OS 242b is performed by various known methods, the detailed description thereof will be omitted.

After the abnormal node information is transmitted to the XBB 10 in Step A50, the log collection unit 221b of BB #0 in which abnormality occurs collects log information about the abnormality (see reference numeral A120).

The log information transmitting unit 222 transmits the log information collected by the log information collection unit 221b to the XBB 10 (see reference numeral A130).

The log information analysis unit 121 of the XBB 10 receives the log information transmitted from the log information transmitting unit 222 of the BB 20 (see reference numeral A140) and analyzes the log information (see reference numeral A150). The analysis of the log information analysis unit 121 includes the creation of detailed information (for example, information about a thread number and a core number where failure occurs in the CPU 231 and the type of failure) about the abnormal information of hardware. In addition, the log information analysis unit 121 may store the analyzed detailed information in a memory (not illustrated) of the XBB 10. Therefore, when a component in which failure occurs returns to a factory, it can be used for investigation.

The failure process of the multi-node system 1 is completed in this way.

As such, in the failure process of the multi-node system 1, the abnormal part information collection unit 221a separates only the collection of the abnormal node information (see reference numeral A30) from the collection of the log information (see reference numeral A120) and preferentially performs the collection of the abnormal node information. In addition, the abnormal part information analysis unit 227 and the abnormal node information creation unit 223 separate only the analysis of the abnormal part information and the creation of the abnormal node information (see reference numeral A30) from the analysis of the log information by the XBB 10 (see reference numeral A150) and preferentially performs the analysis of the abnormal part information and the creation of the abnormal node information. Then, after the abnormal node information creation unit 223 creates the abnormal node information, the abnormal node information notifying unit 210a immediately notifies only the abnormal node information to the XBB 10 (see reference numeral A50).

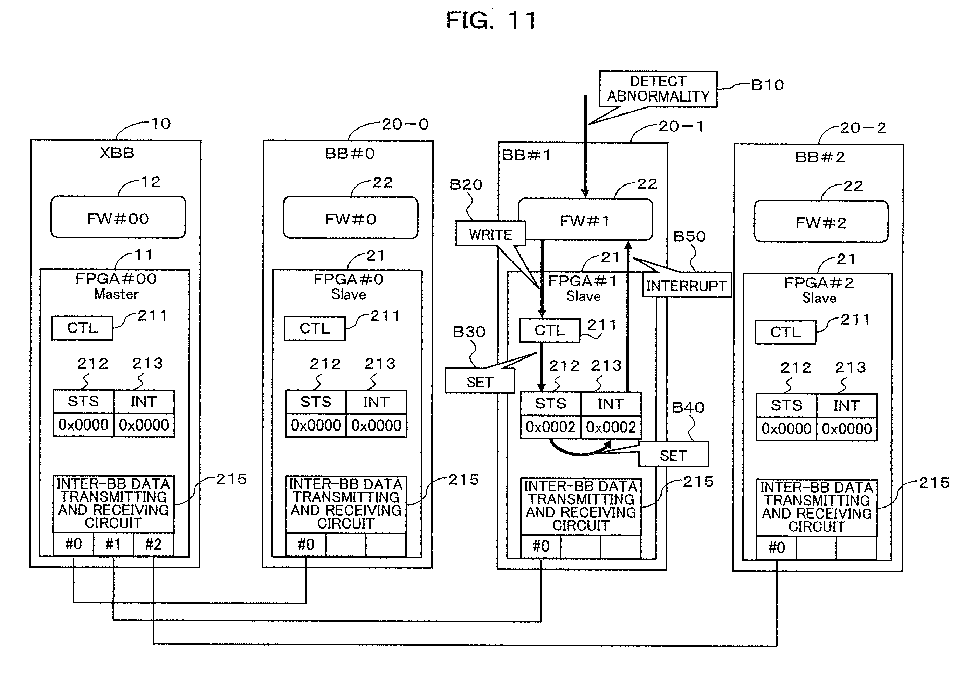

Next, a failure process when the multi-node system 1 according to the embodiment is provided will be described with reference to FIGS. 11 to 13.

Hereinafter, an example in which n is 2, that is, the multi-node system 1 includes three BBs #0 to #2 will be described with reference to FIGS. 11 to 13.

In the example illustrated in FIGS. 11 to 13, some of the functional structures of the XBB 10 and the BB 20 are not illustrated for simplicity of illustration.

As illustrated in FIGS. 11 to 13, a number #00 is given to each of the FPGA 11 and the master firmware 12 of the XBB 10. Similarly, a number #0 is given to each of the FPGA 21 and the slave firmware 22 of BB #0, a number #1 is given to each of the FPGA 21 and the slave firmware 22 of BB #1, and a number #2 is given to each of the FPGA 21 and the slave firmware 22 of BB #2. In addition, port #0 of the XBB 10 is connected to port #0 of BB #0, port #1 of the XBB 10 is connected to port #0 of BB #1, and port #2 of the XBB 10 is connected to port #0 of BB #2.

Hereinafter, in some cases, the FPGA 11 and the master firmware 12 of the XBB 10 are referred to as FPGA #00 and FW #00, respectively. In addition, hereinafter, in some cases, the FPGAs 21 and the slave firmware 22 of BBs #0 to #2 are referred to as FPGAs #0 to #2 and FWs #0 to #2, respectively.

Next, a method for updating the registers of the FPGAs 11 and 21 when abnormality occurs will be described in detail.

In the example illustrated in FIGS. 11 to 13, the CNTL register 211, the STATUS register 212, and the INT register 213 each store a 3-bit register value corresponding to BBs #0 to #2. It is assumed that the lower first to third digits of the register value correspond to the numbers of FWs #0 to #2 provided in each BB 20, respectively. For example, when abnormality occurs in BB #1 including FW #1, the lower second digit of the register value is "1" and the register value is "0010". When the register value "0010" is represented in hexadecimal notation, it is "0x0002". It is assumed that the register values in the FPGAs 11 and 21 are represented in, for example, hexadecimal notation. The upper two digits, "0x", of the hexadecimal number are hexadecimal numbers.

In the following description, it is assumed that an m-th bit of each of the CNTL register 211, the STATUS register 212, and the INT register 213 is represented by CNTL[m], STATUS[m], and INT[m], respectively (m is a value corresponding to each BB 20 provided in the multi-node system 1. In the embodiment, m is an integer in the range of 0 to 2).

When abnormality occurs in BB #1, the abnormality detection unit 23 of BB #1 detects the abnormality (see reference numeral B10 in FIG. 11) and issues an interrupt to FW #1.

FW #1 writes the created abnormal node information to the CNTL register 211 of FPGA #1 (see reference numeral B20 in FIG. 11). Specifically, FW #1 writes "1" to CNTL[1]. In the example illustrated in FIG. 11, since abnormality occurs in BB #1 including FW #1, the hexadecimal number "0x0002" is set to the STATUS register 212. On the other hand, as illustrated in FIG. 11, a hexadecimal number "0x0000" is set as an initial value indicating that abnormality does not occur in any node to the STATUS register 212 and the INT register 213 of each node other than BB #1.

FPGA #1 updates the STATUS register 212. That is, FPGA #1 sets "1" to STATUS [1], based on the update of the CNTL register 211 (see reference numeral B30 in FIG. 11).

FPGA #1 updates the INT register 213. That is, FPGA #1 sets "1" to INT [1], based on the update of the STATUS register 212 (see reference numeral B40 in FIG. 11).

FPGA #1 issues an interrupt to FW #1, based on the update of the INT register 213 (see reference numeral B50 in FIG. 11).

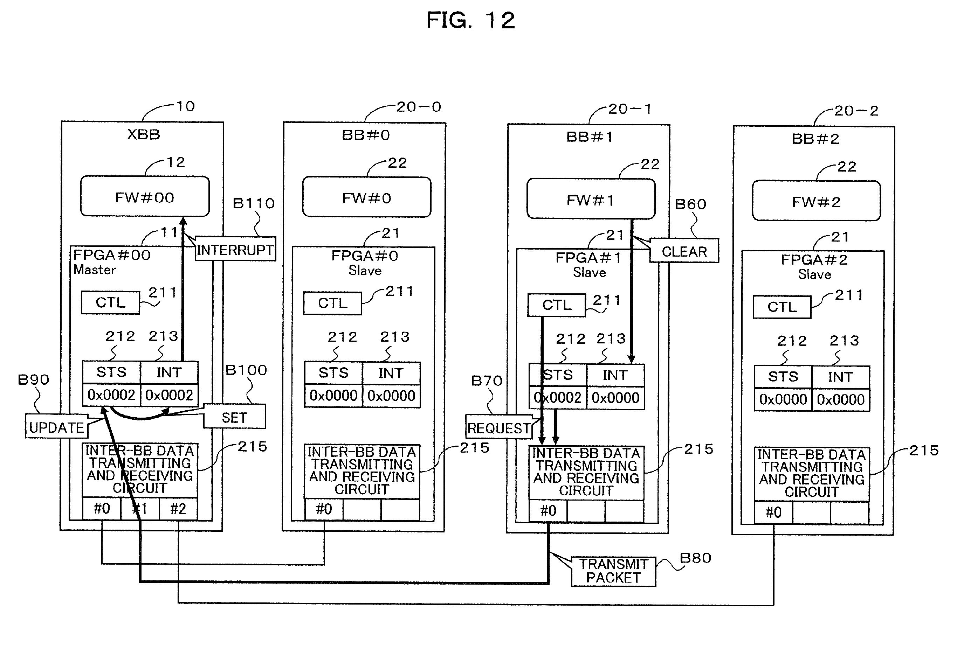

FW #1 receives the interrupt and clears INT [1] to "0" (see reference numeral B60 in FIG. 12).

FPGA #1 writes "1" to CNTL [1] and issues a request to transmit a packet to which the abnormal node information is added to the inter-BB data transmitting and receiving circuit 215 (see reference numeral B70 in FIG. 12).

The inter-BB data transmitting and receiving circuit 215 of BB #1 transmits the packet to which the abnormal node information is added to the XBB 10 (see reference numeral B80 in FIG. 12). In the example illustrated in FIG. 12, the packet is transmitted from port #0 of BB #1 to port #1 of the XBB 10.

The inter-BB data transmitting and receiving circuit 215 of the XBB 10 receives the packet to which the abnormal node information is added. FPGA #00 updates the STATUS register 212 based on the abnormal node information (see reference numeral B90 in FIG. 12). That is, FPGA #00 writes "1" to STATUS[1].

FPGA #00 sets "1" to INT [1] based on the update of the STATUS register 212 (see reference numeral B100 in FIG. 12).

FPGA #00 issues an interrupt to FW #00 based on the update of the INT register 213 (see reference numeral B110 in FIG. 12).

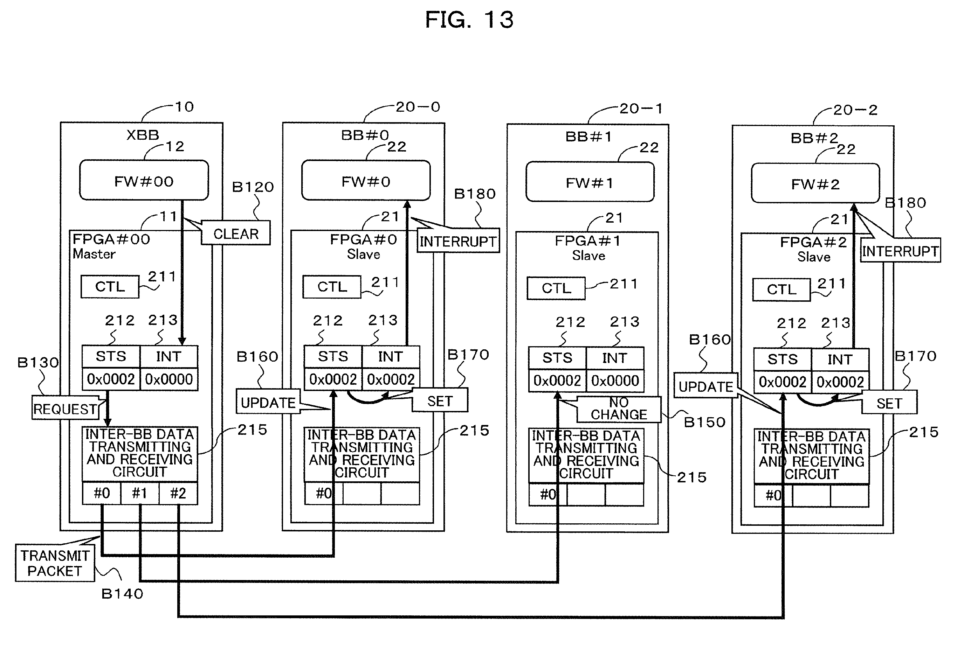

FW #00 receives the interrupt and clears INT [1] to "0" (see reference numeral B120 in FIG. 13).

FPGA #00 receives the packet to which the abnormal node information is added from BB #1 and issues a request to transmit the packet to which the abnormal node information is added to the inter-BB data transmitting and receiving circuit 215 (see reference numeral B130 in FIG. 13).

The inter-BB data transmitting and receiving circuit 215 of the XBB 10 transmits the packet to which the abnormal node information is added to all BBs 20 (see reference numeral B140 in FIG. 13). In the example illustrated in FIG. 13, the packet is transmitted from port #0 of the XBB 10 to port #0 of BB #0, from port #1 of the XBB 10 to port #0 of BB #1, and from port #2 of the XBB 10 to port #0 of BB #2.

The inter-BB data transmitting and receiving circuit 215 of each BB 20 receives the packet to which the abnormal node information is added and rewrites the received abnormal node information to the STATUS register 212.

Since the value of the STATUS register 212 is not changed in FPGA #1 of BB #1, the INT register 213 is also not changed (see reference numeral B150 in FIG. 13).

FPGA #0 of BB #0 rewrites (updates) "1" to STATUS[1] in the STATUS register 212 (see reference numeral B160 in FIG. 13).

FPGA #0 sets "1" to INT [1] in the INT register 213, based on the update of the STATUS register 212 (see reference numeral B170 in FIG. 13).

FPGA #0 issues an interrupt to FW #0 based on the update of the INT register 213 (see reference numeral B180 in FIG. 13). When receiving the interrupt, FW #0 clears INT[1] to "0".

As illustrated in FIG. 13, the same process at that for BB #0 is performed for BB #2 (see reference numerals B160 to B180 in FIG. 13).

In this way, the failure process when the multi-node system 1 is provided is completed.

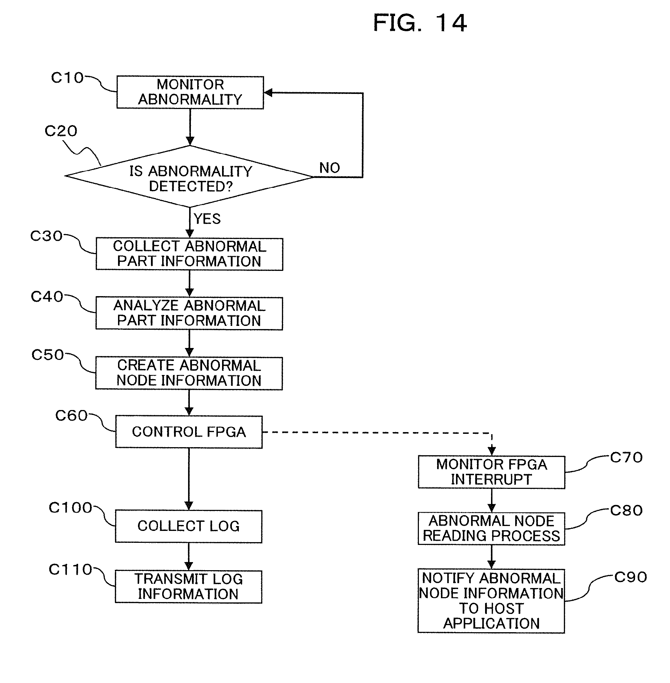

Next, the failure process of the slave firmware in the multi-node system according to the embodiment will be described with reference to the flowcharts illustrated in FIGS. 14 to 17 (Steps C10 to C110). FIG. 15 is a flowchart (Steps C31, C41, and C51) illustrating the details of Steps C30 to C50 illustrated in FIG. 14.

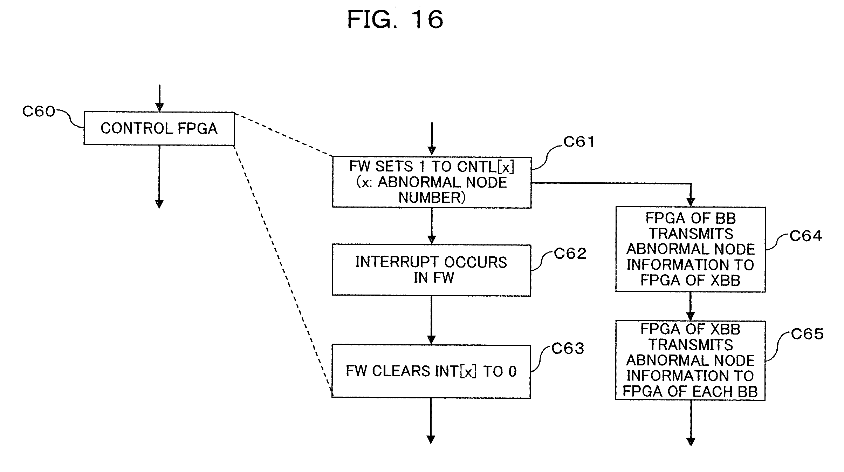

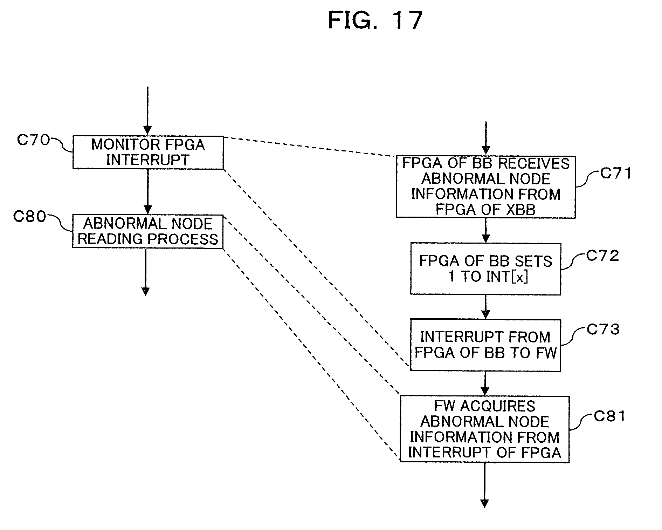

FIG. 16 is a flowchart (Steps C61 to C65) illustrating the details of Step C60 illustrated in FIG. 14. FIG. 17 is a flowchart (Steps C71 to C73 and Step C81) illustrating the details of Steps C70 and C80 illustrated in FIG. 14.

The abnormality monitoring unit 226 monitors the interrupt of the occurrence of abnormality by the abnormality detection unit 23 (Step C10 in FIG. 14).

The abnormality monitoring unit 226 determines whether the interrupt of the occurrence of abnormality by the abnormality detection unit 23 is detected (Step C20 in FIG. 14).

When the abnormality monitoring unit 226 does not detect the interrupt of the occurrence of abnormality by the abnormality detection unit 23 (see a "NO" route of Step C20 in FIG. 14), the process returns to Step C10 to repeat the monitoring of the interrupt of the occurrence of abnormality.

When the abnormality monitoring unit 226 detects the interrupt of the occurrence of abnormality by the abnormality detection unit 23 (see a "YES" route of Step C20 in FIG. 14), the abnormal part information collection unit 221a collects the abnormal part information of the BB 20 in which abnormality occurs (Step C30 in FIG. 14).

The abnormal part information analysis unit 227 analyzes the abnormal part information collected by the abnormal part information collection unit 221a (Step C40 in FIG. 14).

The abnormal node information creation unit 223 creates abnormal node information, based on the abnormal part information analyzed by the abnormal part information analysis unit 227 (Step C50 in FIG. 14).

The FPGA control unit 224 writes the abnormal node information created by the abnormal node information creation unit 223 to the FPGA 21 (Step C60 in FIG. 14).

The FPGA interrupt monitoring unit 225a detects the interrupt of the abnormal node information from the FPGA 21 (Step C70 in FIG. 14).

When the FPGA interrupt monitoring unit 225a detects the interrupt, the abnormal node reading unit 225b reads the abnormal node information (Step C80 in FIG. 14).

The notifying unit 225c notifies the abnormal node information read by the abnormal node information reading unit 225b to the host application 241 and the HV/OS 242 (Step C90 in FIG. 14).

After the FPGA control unit 224 writes the abnormal node information to the FPGA 21 in Step C60, the log collection unit 221b collects log information about the abnormality which occurs in the BB 20 (Step C100 in FIG. 14). The log information may be collected at the same time as it is written to the FPGA 21.

The log information transmitting unit 222 transmits the log information collected by the log information collection unit 221b to the XBB 10 (Step C110 in FIG. 14).

In this way, the failure process of the multi-node system 1 is completed.

The process from Step C30 to Step C50 can be described in detail as illustrated in FIG. 15.

In Step C30, the abnormal part information collection unit 221a reads the values of the abnormal part register 251 and the abnormality level register 252 of the BB 20 (Step C31 in FIG. 15). For the values of the abnormal part register 251 and the abnormality level register 252, when no failure occurs, 0 is set to all bits. When abnormality occurs, "1" is stored for a component, such as a "CPU" or a "power supply" which is monitored as an abnormal part in advance, in the abnormal part register 251. In the example illustrated in FIG. 15, "1" indicating an abnormal part is set to the "CPU". In addition, when abnormality occurs, the abnormality level register 252 stores information indicating an abnormality level (the degree of importance; "Alarm (A)" or "Warning (W)") for each component indicated in the abnormal part register 251. In the example illustrated in FIG. 15, "1" indicating that the abnormality level of the "CPU" is "Alarm" is set. As such, when "1" is set in the abnormal part register 251, "1" is also set in the abnormality level register 252. In addition, the fields other than "Alarm" and "Warning" in the abnormality level register are for expansion. For example, abnormality levels other than "Alarm" and "Warning" may be defined.

In Step C40, the abnormal part information analysis unit 227 determines whether the abnormal part is an important component (for example, the CPU or the power supply) and the abnormality level is "Alarm" (Step C41 in FIG. 15). The determination operation of the abnormal part information analysis unit 227 is illustrative, but the embodiment is not limited thereto. For example, only the criterion for determining whether the abnormality level is "Alarm" may be used. In addition, the criterion for determining whether the abnormal part is an important component may be set in advance.

When the abnormal part is an important component and the abnormality level is "Alarm" (see a "YES" route of Step C41 in FIG. 15), the abnormal node information creation unit 223 sets the abnormal node information indicating the number of the BB 20 in which abnormality occurs in Step C50 (Step C51 in FIG. 15). For example, when abnormality occurs in BB #1, "1" is set to bit 1 indicating BB #1.

On the other hand, when the abnormal part is not an important component or the abnormality level is not "Alarm" (see a "NO" route of Step C41 in FIG. 15), the process proceeds to Step C60, which will be described below, in FIG. 16. That is, the process proceeds to a FPGA control process (Step C60 in FIG. 14), without setting the number of the BB 20 in which abnormality occurs to the abnormal node information.

The process in Step C60 can be described in detail, as illustrated in FIG. 16.

In Step C60, the FPGA control unit 224 sets "1" to CNTL[x] (x is the number of the BB in which abnormality occurs) (Step C61 in FIG. 16). When the abnormal part is not an important component or the abnormality level is not "Alarm" (see a "NO" route of Step C41 in FIG. 15), the FPGA control unit 224 does not set "1" to any bit in the CNTL register 211 since the number of the BB 20 in which abnormality occurs is not set to the abnormal node information (Step C51 in FIG. 15).

The FPGA interrupt monitoring unit 225a receives the interrupt since "1" is set to INT[x] in the FPGA 21 (Step C62 in FIG. 16).

When receiving the interrupt, the FPGA interrupt monitoring unit 225a clears INT [x] of FPGA 21 to "0".

After the process in Step C61 is performed, the FPGA 21 of the BB 20 transmits the packet to which the abnormal node information is added to the FPGA 11 of the XBB 10 in parallel with the process in Steps C62 and C63 (Step C64 in FIG. 16).

The FPGA 11 of the XBB 10 transmits the packet to which the abnormal node information is added to the FPGAs 21 of all BBs 20 (Step C65 in FIG. 16).

The process in Steps C70 and C80 can be described in detail, as illustrated in FIG. 17.

In Step C70, the FPGA 21 of the BB 20 receives the packet to which the abnormal node information is added from the FPGA 11 of the XBB 10 (Step C71 in FIG. 17).

The FPGA 21 sets (updates) INT[x] to "1", based on the update of STATUS[x] (Step C72 in FIG. 17).

When the FPGA 21 sets "1" to INT[x], the FPGA interrupt monitoring unit 225a receives an interrupt (Step C73 in FIG. 17).

In Step C80, the abnormal node information reading unit 225b acquires the abnormal node information from the interrupt from the FPGA 21 (Step C81 in FIG. 17).

### [A-3] Effect

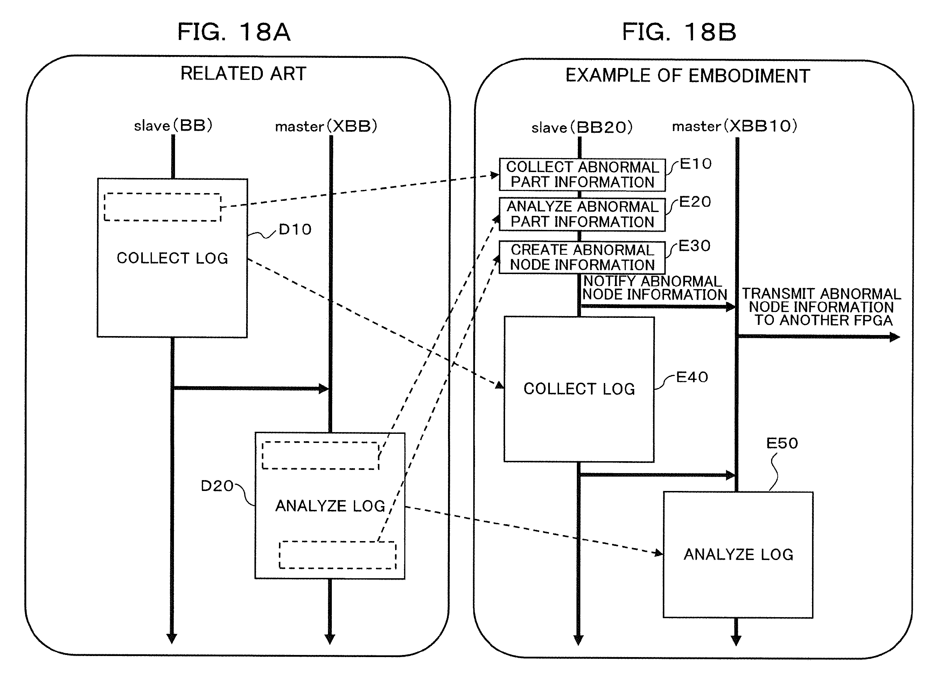

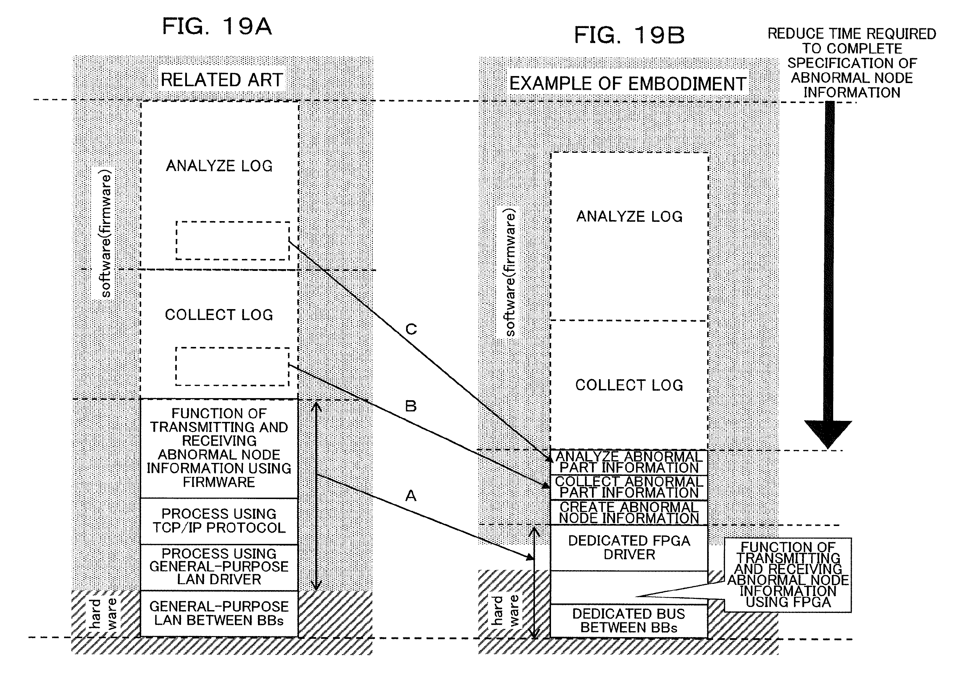

FIGS. 18A and 18B are sequence diagrams illustrating the comparison between the failure process of the multi-node system according to the related art and the failure process of the multi-node system according to the embodiment. FIG. 19A is a diagram illustrating the time required for the failure process of the multi-node system according to the related art and FIG. 19B is a diagram illustrating the time required for the failure process of the multi-node system according to the embodiment.

In the multi-node system according to the related art, as illustrated in FIG. 18A, the BB collects all log information about abnormality from the BB in which abnormality occurs (see reference numeral D10 in FIG. 18A) and transmits the log information to the XBB. The XBB receives the log information transmitted from the BB and analyzes the log information (see reference numeral D20 in FIG. 18A). After the log information is analyzed, the XBB notifies an abnormal node to each BB.

In the multi-node system 1 according to the embodiment, as illustrated in FIG. 18B, the BB 20 preferentially collects only the abnormal part information of the BB 20 in which abnormality occurs (see reference numeral E10 in FIG. 18B). In addition, the BB 20 analyzes only the collected abnormal part information (see reference numeral E20 in FIG. 18B), creates abnormal node information, based on the analyzed abnormal part information (see reference numeral E30 in FIG. 18B), and notifies the created abnormal node information to the XBB 10. The XBB 10 transmits the abnormal node information received from the BB 20 to all BBs 20. After notifying the abnormal node information to the XBB 10, the BB 20 collects all log information about abnormality from the BB in which abnormality occurs (see reference numeral E40 in FIG. 18B) and transmits the log information to the XBB 10. The XBB 10 receives the log information transmitted from the BB 20 and analyzes the log information (see reference numeral E50 in FIG. 18B).

That is, in the multi-node system 1 according to the embodiment, the BB 20 performs the abnormal part information collection process (reference numeral E10 in FIG. 18B) which has been performed in the log collection process (reference numeral D10 in FIG. 18A) in the related art and the abnormal part analysis process (reference numeral E20 in FIG. 18B) and the abnormal node information creation process (reference numeral E30 in FIG. 18B) which have been performed in the log analysis process (reference numeral D20 in FIG. 18A) in the related art, prior to the log collection process (reference numeral E40 in FIG. 18B).

In other words, the BB 20 performs the abnormal part information collection process, the abnormal part information analysis process, and the abnormal node information creation process (reference numerals E10 to E30 in FIG. 18B) prior to the log collection process (reference numeral E40 in FIG. 18B). Therefore, each BB 20 can notify the abnormal node information to the host application 24 in a shorter time than the method according to the related art after the occurrence of abnormality is detected.

Next, the effect of the multi-node system 1 according to the above-described embodiment will be described with reference to FIGS. 19A and 19B.

The multi-node system according to the related art includes a general-purpose local area network (LAN) between the BBs as hardware, as illustrated in FIG. 19A. In addition, the multi-node system according to the related art has, as software or firmware, a process using a general-purpose LAN driver, a process using a transmission control protocol/Internet protocol (TCP/IP protocol), a function of receiving the abnormal node information using firmware, a log collection function, and a log analysis function.

On the other hand, as illustrated in FIG. 19B, the multi-node system 1 according to the embodiment includes, as hardware, a dedicated bus between the BBs, a function of transmitting and receiving the abnormal node information using the FPGA, and a dedicated FPGA driver. In addition, the multi-node system 1 according to the embodiment includes, as software or firmware, an abnormal node information creation function, an abnormal part information collection function, an abnormal part information analysis function, a log collection function, and a log analysis function.

That is, the multi-node system 1 according to the embodiment implements the TCP/IP communication process between the master firmware and the slave firmware, which has been implemented by firmware in the multi-node system according to the related art, using hardware and the driver of thereof (see arrow A). Therefore, the processing speed increases. In addition, the multi-node system 1 according to the embodiment preferentially performs the abnormal node information collection, which has been performed as the log collection process in the multi-node system according to the related art, as an abnormal node information collection process (see arrow B). Furthermore, the multi-node system 1 according to the embodiment preferentially performs abnormal node information analysis, which has been performed as the log analysis process in the multi-node system according to the related art, as an abnormal node information analysis process (see arrow C).

As such, according to the multi-node system 1 of the embodiment, the log information collection unit 221 and the abnormal node information creation unit 223 perform the abnormal part information collection process and the abnormal node information creation process prior to the log collection process, respectively. Therefore, as illustrated in FIG. 19B, it is possible to reduce the time until the specification of the abnormal node information is completed. In addition, it is possible to reduce the operation stop time of the multi-node system 1. Specifically, it is possible to reduce the time required for the application 241 or the HV/OS 242 in all BBs 20 to specify the abnormal node information to about a few seconds.

The abnormal node information notification control unit 224 controls the values stored in the CNTL register 211 of the FPGA 21 to reduce the processing time. Specifically, the abnormal node information notification control unit 224 can update the CNTL register 211 at a time of about a few microseconds.

The abnormal node information transmitting unit 110, the abnormal node information notifying unit 210a, and the abnormal node information receiving unit 210b provided in the FPGAs 11 and 21 transmit and receive the abnormal node information through the dedicated inter-BB bus. Therefore, it is possible to increase the communicate speed between the nodes. Specifically, FPGAs 11 and 21 can perform the communication between the nodes at a time of about a few microseconds.

### [B] Others

The disclosed technique is not limited to the above-described embodiment, but various modifications of the disclosed technique can be made without departing from the scope and spirit of the embodiment. The structures and processes according to the embodiment can be selected if necessary, or they may be appropriately combined with each other.

## Claims

1. An information processing system (1) comprising:
a plurality of information processing apparatuses (20),
wherein each of the information processing apparatuses (20) includes:
an abnormality detection unit (23) that detects the occurrence of abnormality;
a log information collection unit (221) that collects log information of the information processing apparatus (20) from which the abnormality is detected;
an abnormal apparatus information creation unit (223) that creates abnormal apparatus information indicating the information processing apparatus (20) from which the abnormality is detected, prior to the collection of the log information by the log information collection unit (221); and
an abnormal apparatus information notifying unit (210a) that notifies the abnormal apparatus information created by the abnormal apparatus information creation unit (223) to each of the plurality of information processing apparatuses (20), prior to the collection of the log information by the log information collection unit (221).

2. The information processing system (1) according to claim 1,
wherein each of the plurality of information processing apparatuses (20) further includes a host notification processing unit (225) that notifies the abnormal apparatus information to a host application (24) when the abnormal apparatus information is notified.

3. The information processing system (1) according to claim 1 or 2, further comprising:
a communication control unit (10) that includes an abnormal apparatus information transmitting unit (110) which transmits the abnormal apparatus information to each of the plurality of information processing apparatuses (20) when the abnormal apparatus information is notified,
wherein the abnormal apparatus information notifying unit (210a) notifies the abnormal apparatus information to the abnormal apparatus information transmitting unit (110).

4. The information processing system (1) according to claim 3,
wherein each of the abnormal apparatus information notifying unit (210a) and the abnormal apparatus information transmitting unit (110) is provided in a field programmable gate array (FPGA) (21, 11) including a status management information storage unit (212) that can store the abnormal apparatus information,
when the status management information storage unit (212) is updated, the FPGA (21) of the information processing apparatus (20) notifies the abnormal apparatus information stored in the status management information storage unit (212) to the FPGA (11) of the communication control unit (10), and
when the status management information storage unit (212) is updated, the FPGA (11) of the communication control unit (10) simultaneously notifies the abnormal apparatus information stored in the status management information storage unit (212) to the FPGA (21) of each of the plurality of information processing apparatuses (20).

5. An information processing apparatus (20) comprising:
a communication unit (21) that is connected so as to communicate with a plurality of information processing apparatuses (20);
an abnormality detection unit (23) that detects the occurrence of abnormality;
a log information collection unit (221) that collects log information about the detected abnormality;
an abnormal apparatus information creation unit (223) that creates abnormal apparatus information indicating the information processing apparatus (20) from which the abnormality is detected, prior to the collection of the log information by the log information collection unit (221); and
an abnormal apparatus information notifying unit (210a) that notifies the abnormal apparatus information created by the abnormal apparatus information creation unit (223) to the plurality of information processing apparatuses (20) through the communication unit (21), prior to the collection of the log information by the log information collection unit (221).

6. The information processing apparatus (20) according to claim 5, further comprising:
a host notification processing unit (225) that notifies the abnormal apparatus information to a host application (24) when the abnormal apparatus information is notified.

7. The information processing apparatus (20) according to claim 5 or 6,
wherein the abnormal apparatus information notifying unit (210a) is provided in a field programmable gate array (FPGA) (21) including a status management information storage unit (212) that can store the abnormal apparatus information, and
when the status management information storage unit (212) is updated, the FPGA (21) notifies the abnormal apparatus information stored in the status management information storage unit (212) to an FPGA (11) of a communication control device (10) that is connected so as to communicate with the information processing apparatus (20).

8. A failure processing method that is performed in an information processing system (1) including a plurality of information processing apparatuses (20), comprising:
at any one of the information processing apparatuses (20),
detecting the occurrence of abnormality;
collecting log information of the information processing apparatus (20) from which the abnormality is detected and creating abnormal apparatus information indicating the information processing apparatus (20) from which the abnormality is detected, prior to the collection of the log information; and
notifying the created abnormal apparatus information to each of the plurality of information processing apparatuses (20), prior to the collection of the log information.

9. The failure processing method according to claim 8, further comprising:
at each of the plurality of information processing apparatuses (20),
upon receipt of the abnormal apparatus information, notifying the abnormal apparatus information to a host application (24).

10. The failure processing method according to claim 8 or 9, further comprising:
notifying the abnormal apparatus information to a communication control unit (10) which is provided to transmit the abnormal apparatus information to each of the plurality of information processing apparatuses (20) when the abnormal apparatus information is notified.

11. The failure processing method according to claim 10, further comprising:
at the information processing apparatus (20), when a status management information storage unit (212), which is provided in the information processing apparatus (20) and is capable of storing the abnormal apparatus information, is updated, notifying the abnormal apparatus information stored in the status management information storage unit (212) to the communication control unit (10), and
at the communication control unit (10), when a status management information storage unit (212), which is provided in the communication control unit (10) and is capable of storing the abnormal apparatus information, is updated, simultaneously notifying the abnormal apparatus information stored in the status management information storage unit (212) to each of the plurality of information processing apparatuses (20).

12. A failure processing method that is performed in an information processing system (1) including a plurality of information processing apparatuses (20), comprising:
detecting the occurrence of abnormality in any one of the plurality of information processing apparatuses (20); and
notifying abnormal apparatus information indicating the information processing apparatus (20) from which the abnormality is detected to each of the plurality of information processing apparatuses (20), prior to the collection and analysis of log information about the detected abnormality.
